# EUROPEAN PATENT APPLICATION

(11) **EP 4 421 801 A1**
(43) Date of publication of application: **28.08.2024**
(21) Application number: 23826258.8
(22) Date of filing: 15.06.2023
(51) Int. Cl.: G10L 15/02

(54) **SPEECH INTERACTION METHOD, ELECTRONIC DEVICE AND SPEECH ASSISTANT DEVELOPMENT PLATFORM**

(30) Priority: 24.06.2022 CN 202210730938
(71) Applicant: Huawei Technologies Co., Ltd., Shenzhen, Guangdong 518129 (CN)
(72) Inventor: SU, Qing, Shenzhen, Guangdong 518129 (CN); ZHOU, Jianhui, Shenzhen, Guangdong 518129 (CN)
(74) Representative: Maiwald GmbH
(86) International application number: PCT/CN2023/100373
(87) International publication number: WO 2023/246609

(57) **Abstract**

A voice interaction method (800), an electronic device, and a voice assistant development platform are provided. The method (800) is applied to a voice interaction system. The method (800) includes: obtaining a first statement (810) input by a user; obtaining a first intent (820) of the user based on the first statement; determining a target interface (830) for interacting with an application corresponding to the first intent, where the target interface is one or more of a synchronous interface, an asynchronous interface, or a UI interface; and invoking the target interface to perform an operation (840) related to the first intent. A standard specification for voice access is provided for an application, so that complexity of interconnection between a voice assistant and different applications in the voice interaction system can be reduced.

## Description

This application claims priority to Chinese Patent Application No. 202210730938.3, filed with the China National Intellectual Property Administration on June 24, 2022 and entitled "VOICE INTERACTION METHOD, ELECTRONIC DEVICE, AND VOICE ASSISTANT DEVELOPMENT PLATFORM", which is incorporated herein by reference in its entirety.

### TECHNICAL FIELD

Embodiments of this application relate to the field of voice technologies, and more specifically, to a voice interaction method, an electronic device, and a voice assistant development platform.

### BACKGROUND

With development of voice technologies, a scenario in which a user interacts with an application (application, App) by using voice is very common. When the user interacts with the application by using voice, a voice assistant needs to identify an intent of the user, and invoke a corresponding application service, to provide good human-computer interaction experience for the user.

However, different voice assistant providers may provide different solutions for interconnecting with the application. This increases complexity of interconnection between the voice assistant and different applications.

### SUMMARY

Embodiments of this application provide a voice interaction method, an electronic device, and a voice assistant development platform. The technical solution may provide a standard specification of voice access for an application, so that complexity of interconnection between a voice assistant and different applications can be reduced.

According to a first aspect, a voice interaction method is provided. The method is applied to a voice interaction system. The method includes: obtaining a first statement input by a user; obtaining a first intent of the user based on the first statement; determining a target interface for interacting with an application corresponding to the first intent, where the target interface is one or more of a synchronous interface, an asynchronous interface, or a UI interface; and invoking the target interface to perform an operation related to the first intent.

It should be understood that the target interface may be a system interface, or may be a customized interface. This is not limited in embodiments of this application.

It should be understood that the voice interaction system may include an electronic device and a server, and the electronic device and the server may be configured to perform corresponding steps in the foregoing voice interaction method. The voice interaction system may alternatively include an electronic device, and the electronic device is configured to perform corresponding steps in the foregoing voice interaction method. The voice interaction system may alternatively include a server, and the server is configured to perform corresponding steps in the foregoing voice interaction method.

In an embodiment of this application, the first intent of the user may be obtained based on the first statement of the user, an interface for interacting with an application is determined based on a configuration file, and then the interface is invoked to perform the operation related to the first intent of the user. In this technical solution, when the user expects the application to provide a service, the interface for interacting with the application may be determined based on the configuration file, to invoke the interface to perform an operation related to an intent of the user. In this way, complexity of interconnection between a voice assistant and different applications in the voice interaction system can be reduced.

In some embodiments, the method may also be applied to an in-vehicle infotainment, a robot, or the like. This is not limited in embodiments of this application.

With reference to the first aspect, in some implementations of the first aspect, the voice interaction system further includes a configuration file, the configuration file includes a mapping relationship between the first intent and the target interface, and the determining a target interface for interacting with an application corresponding to the first intent includes: determining, based on the configuration file, the target interface for interacting with the application corresponding to the first intent.

It should be understood that the configuration file may be predefined. The configuration file may be written by a developer of a target application, and the configuration file may define a target interface used by the target application and interaction content of the target application.

In this embodiment of this application, the configuration file may be pre-stored in the voice interaction system, and the configuration file may include the mapping relationship between the first intent and the target interface, so that the target interface for interacting with the application corresponding to the first intent can be determined.

With reference to the first aspect, in some implementations of the first aspect, the target interface is a synchronous interface or an asynchronous interface, and the invoking the target interface to perform an operation related to the first intent includes: invoking the synchronous interface or the asynchronous interface, to transfer the first intent and slot information corresponding to the first intent to the application; determining, based on a configuration file and a first result returned by the application, a first manner for outputting; and outputting an execution result of the first intent based on the first manner.

For example, the first manner may be one or more of text display, voice broadcast, or card display.

The first result may be a return result code, or may be a return result code and corresponding content, or may be a placeholder, or the like. Content included in the first result may be defined in the configuration file.

In this embodiment of this application, when the target interface is a synchronous interface or an asynchronous interface, the synchronous interface or the asynchronous interface may be invoked, to transfer the first intent of the user and the slot information corresponding to the first intent to the application, the first manner for outputting is determined based on a return result of the application, and the execution result of the first intent is presented to the user in the first manner, so that a corresponding service can be provided for the user.

With reference to the first aspect, in some implementations of the first aspect, when the target interface is a synchronous interface, before the determining, based on a configuration file and a first result returned by the application, a first manner for outputting, the method further includes: refusing to invoke the target interface to perform an operation related to a second intent, where the second intent is determined based on a second statement input by the user.

In this embodiment of this application, when the target interface is a synchronous interface, before the operation corresponding to the first intent is completed, the voice interaction system cannot synchronously execute the second intent of the user, to prevent a sequence disorder of voice interaction from affecting user experience.

With reference to the first aspect, in some implementations of the first aspect, when the target interface is an asynchronous interface, before the determining, based on a configuration file and a first result returned by the application, a first manner for outputting, the method further includes: invoking the target interface to perform an operation related to a second intent, where the second intent is determined based on a second statement input by the user.

In some embodiments, when the first intent of the user is a related intent of controlling a device, for example, setting an air conditioner temperature, opening or closing a vehicle window, or controlling a curtain, the first intent is generally executed by invoking the asynchronous interface.

In this embodiment of this application, when the target interface is an asynchronous interface, before the operation corresponding to the first intent is completed, the user may continue to release a voice instruction, and the voice interaction system may synchronously execute the second intent of the user, to improve voice interaction efficiency.

With reference to the first aspect, in some implementations of the first aspect, the first result includes first information, the first information indicates an execution result of the application for the first intent, and the outputting an execution result of the first intent based on the first manner includes: determining the execution result based on the configuration file and the first information; and outputting the execution result in the first manner.

For example, the first information may be a return result code. For example, 0 corresponds to a successful execution, and 1 corresponds to a failed execution. The first information may be defined in the configuration file.

In this embodiment of this application, the voice interaction system may determine the execution result based on the configuration file and the first information, and present the execution result to the user, to provide the corresponding service for the user.

With reference to the first aspect, in some implementations of the first aspect, the first result includes placeholder information, and the outputting an execution result of the first intent based on the first manner includes: determining the execution result based on the configuration file and the placeholder information; and outputting the execution result in the first manner.

In this embodiment of this application, the first result returned by the application may include the placeholder information. In this case, the voice interaction system may determine a complete execution result based on both content configured in the configuration file and the placeholder information, and present the execution result to the user, to provide the corresponding service for the user.

With reference to the first aspect, in some implementations of the first aspect, the first result includes content of the first manner, and the outputting an execution result of the first intent based on the first manner includes: outputting the execution result in the first manner.

In this embodiment of this application, in some cases, content corresponding to the intent of the user changes in real time (for example, weather). In this case, the first result returned by the target application may further include specific content (for example, a real-time weather condition) of the execution result, and the voice interaction system may present the first result to the user, to provide the corresponding service for the user.

With reference to the first aspect, in some implementations of the first aspect, the first manner includes at least one of the following: text display, voice broadcast, and card display.

With reference to the first aspect, in some implementations of the first aspect, the target interface is a UI interface, and the invoking the target interface to perform an operation related to the first intent includes: invoking the UI interface to transfer the first intent and slot information corresponding to the first intent to the application; and displaying a target display interface of the application, where the target display interface is a display interface that corresponds to the first intent and the slot information corresponding to the first intent.

In this embodiment of this application, when the target interface is a UI interface, the first intent and the slot information corresponding to the first intent may be an access address of a display interface, so that an electronic device can open a corresponding display interface based on the access address.

With reference to the first aspect, in some implementations of the first aspect, the obtaining a first intent of the user based on the first statement includes: sending the first statement to a cloud server; and receiving the first intent obtained by the cloud server by parsing the first statement.

In this embodiment of this application, after obtaining the first statement, the electronic device may send the first statement to the cloud server, and the cloud server parses the first statement to obtain the first intent, and sends the first intent to the electronic device, so that complexity of processing the first statement by the electronic device can be reduced.

With reference to the first aspect, in some implementations of the first aspect, the configuration file is predefined.

In this embodiment of this application, a developer of the application may compile the configuration file based on a service that can be provided by the application, for access of a voice assistant. This technical solution may provide convenience for voice access to the application.

According to a second aspect, a voice assistant development platform is provided, including: The voice assistant development platform is configured to receive a first file, where the first file includes an application and a configuration file, the configuration file includes a mapping relationship between a first intent and a target interface, the target interface is an interface for interaction between a voice assistant and the application, and the target interface is one or more of a synchronous interface, an asynchronous interface, or a UI interface. The voice assistant development platform is further configured to: when it is determined that the first file meets a preset condition, send the first file or the configuration file to a voice assistant cloud server for a voice interaction service.

The preset condition may be whether wording or a language expression manner in the configuration file is legal and compliant, or the preset condition may be whether the application is an application that has been reviewed by a formal platform, or the like.

In an embodiment of this application, a user or a developer may upload the first file including the application and the configuration file to the voice assistant development platform, and the voice assistant development platform may test the first file to determine whether the first file meets a requirement, to review the first file, and ensure compliance of a service provided by the application.

In some embodiments, the first file may alternatively include only the application, and the configuration file may be included in the application.

With reference to the second aspect, in some implementations of the second aspect, the configuration file is used by the voice assistant to determine a target interface for interacting with an application corresponding to the first intent, so that the voice assistant invokes the target interface to perform an operation related to the first intent.

In this embodiment of this application, the voice assistant may determine, based on the configuration file, the target interface for interacting with the application corresponding to the first intent, so that the voice assistant may invoke the target interface to perform the operation related to the first intent.

In some embodiments, the voice assistant development platform may further perform offline processing on a released first file.

With reference to the second aspect, in some implementations of the second aspect, the voice assistant development platform is further configured to: edit the configuration file in response to a first operation of a user.

In this embodiment of this application, the user may modify the configuration file on the voice assistant development platform, so that the configuration file can be updated, and the configuration file does not need to be re-uploaded, thereby improving efficiency.

With reference to the second aspect, in some implementations of the second aspect, the voice assistant development platform is specifically configured to: add a mapping relationship between a second intent and the target interface to the configuration file; or modify a mapping relationship between the first intent and the target interface in the configuration file.

In this embodiment of this application, the user may modify the configuration file on the development platform, for example, add a mapping relationship between a new intent and the target interface, or change a mapping relationship between an original intent and the target interface, to improve development flexibility.

In some embodiments, the user may further customize the application, a corresponding intent, a used interface, interaction content, or the like on the development platform.

With reference to the second aspect, in some implementations of the second aspect, the voice assistant development platform is further configured to: delete the first file in response to a second operation of the user.

In this embodiment of this application, for example, when the first file does not meet a platform requirement, the voice assistant development platform may further delete the first file based on an operation of the user or a manager.

According to a third aspect, an electronic device is provided, including one or more processors and one or more memories. The one or more memories store one or more computer programs; the one or more computer programs include instructions; and when the instructions are executed by the one or more processors, the voice interaction method according to any one of the first aspect or the possible implementations of the first aspect is performed.

According to a fourth aspect, an electronic device is provided, including a module configured to implement the voice interaction method according to any one of the first aspect or the possible implementations of the first aspect.

According to a fifth aspect, this application provides a chip. The chip includes a processor and a communication interface. The communication interface is configured to receive a signal, and transmit the signal to the processor, and the processor processes the signal, so that the voice interaction method according to any one of the first aspect or the possible implementations of the first aspect is performed.

According to a sixth aspect, this application provides a computer-readable storage medium. The computer-readable storage medium stores computer instructions; and when the computer instructions are run on a computer, the voice interaction method according to any one of the first aspect or the possible implementation of the first aspect is performed.

According to a seventh aspect, a computer program product is provided. When the computer program product runs on a computer, the voice interaction method according to any one of the first aspect or the possible implementations of the first aspect is performed.

According to an eighth aspect, a voice interaction system is provided. The voice interaction system is configured to perform the voice interaction method according to any one of the first aspect or the possible implementations of the first aspect.

### BRIEF DESCRIPTION OF DRAWINGS

FIG. 1 is a diagram of a framework of an application according to an embodiment of this application;
FIG. 2(a) to FIG. 2(c) are diagrams of a group of GUIs according to an embodiment of this application;
FIG. 3(a) to FIG. 3(d) are diagrams of another group of GUIs according to an embodiment of this application;
FIG. 4 is a diagram of a voice interaction between a user and an in-vehicle infotainment according to an embodiment of this application;
FIG. 5 is a schematic flowchart of a voice interaction method according to an embodiment of this application;
FIG. 6 is a schematic flowchart of another voice interaction method according to an embodiment of this application;
FIG. 7 is a diagram of a group of GUIs according to an embodiment of this application; and
FIG. 8 is a schematic flowchart of a voice interaction method according to an embodiment of this application.

### DESCRIPTION OF EMBODIMENTS

The following describes technical solutions of embodiments in this application with reference to accompanying drawings.

The technical solutions in embodiments of this application may be applied to an electronic device such as a mobile phone, a tablet, or a wearable device, or may be applied to an in-vehicle infotainment.

Before technical solutions of a voice interaction method provided in embodiments of this application are described, some technical terms that may be used in this application are first briefly described.

Synchronous interface: a system interface used for blocking invoking. When current invoking is not completed, next invoking cannot be executed.

Asynchronous interface: a system interface used for non-blocking invoking. When current invoking is not completed, next invoking may be executed.

UI interface: a system interface used for access, based on an access address, a display interface corresponding to the access address.

Software development kit (software development kit, SDK): a set of development tools used by software engineers to create application software for a specific software package, software framework, hardware platform, operating system, and the like. The SDK usually further includes example code, supporting technical notes, or other supporting documents that clarify doubts for primary reference materials.

Deep link (deep link): The deep link can be used to directly link to an internal page of an application. For example, a deep link can be used to open a fixed page of the application.

Intent and slot: In a voice assistant, an intent of a user in a sentence needs to be understood and a keyword (namely, a slot) needs to be extracted from the sentence. For example, when the user says "Is it going to rain today" to the voice assistant, the intent in the sentence is: querying the weather; slots are as follows: time: today; and weather type: rain.

With development of voice technologies, a scenario in which a user interacts with an application by using voice is very common. When the user interacts with the application by using voice, a voice assistant needs to identify an intent of the user, and invoke a corresponding application service, to provide good human-computer interaction experience for the user.

However, different voice assistant providers may provide different solutions for interconnecting with the application. This increases complexity of interconnection between the voice assistant and different applications.

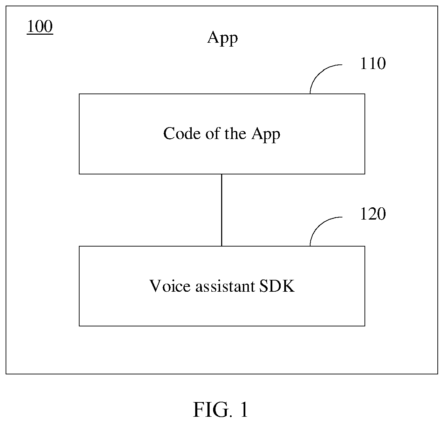

FIG. 1 provides a technical solution of voice access in a manner in which an application is integrated with a voice assistant SDK.

FIG. 1 is a diagram of a framework of an application according to an embodiment of this application. As shown in FIG. 1, the App 100 may include two parts: code 110 of the App and a voice assistant SDK 120.

It should be understood that a voice assistant provider may provide a voice assistant SDK for an application, so that the application can support a voice function, and a user can interact with the application by using voice.

In this case, when a developer of the App 100 develops the App 100, it may be integrated with the voice assistant SDK 120.

When the application is integrated with the voice assistant SDK, the application is coupled with the voice assistant. When the voice assistant SDK is updated, the application needs to be updated synchronously again. In addition, when the application uses the voice assistant, there is a lack of review for a service provided by the application, and quality of an application service cannot be ensured.

In some other solutions, the application may provide some deep links for the voice assistant, and support opening, by using the voice assistant, a display interface corresponding to the deep link. However, in this technical solution, the voice assistant can only open a fixed page, and cannot obtain information from the application and display the information in the voice assistant. Similarly, there is a lack of review for a page corresponding to the deep link provided by the application, and the quality of the application service cannot be ensured.

In view of this, embodiments of this application provide a voice interaction method, an electronic device, and a voice assistant development platform. In the technical solutions, a voice assistant may implement different interaction content by invoking different system interfaces, and may review a service provided by an application, to ensure quality of the application service.

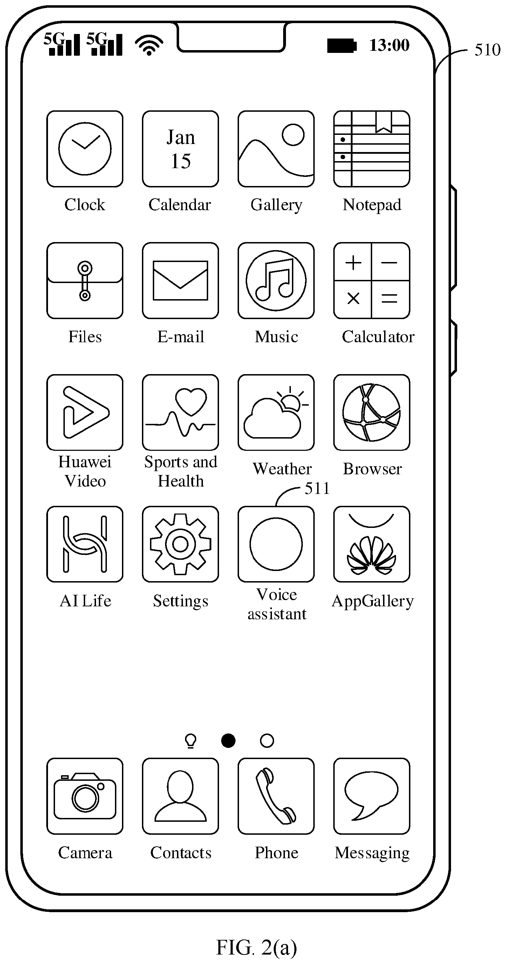

FIG. 2(a) to FIG. 2(c) are diagrams of a group of graphical user interfaces (graphical user interfaces, GUIs) according to an embodiment of this application. FIG. 2(a) to FIG. 2(c) show a process of a voice interaction between a user and an electronic device.

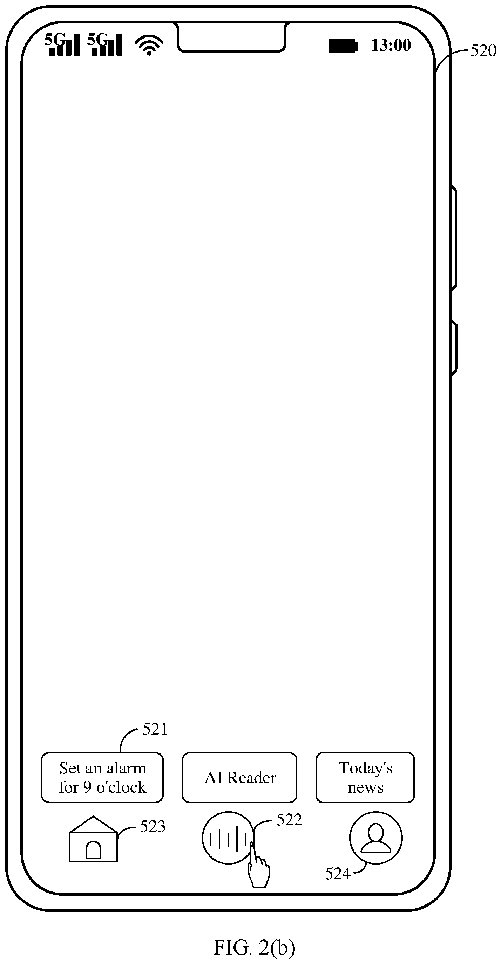

With reference to FIG. 2(a), a GUI is a desktop 510 of the electronic device, and the desktop 510 may include a plurality of applications installed on the electronic device. When detecting that the user taps an icon 511 of a voice assistant, the electronic device may display a GUI shown in FIG. 2(b).

In some embodiments, the user may alternatively make, by using a voice instruction, the electronic device display the GUI shown in FIG. 2(b). For example, the user may say "Xiaoyi, Xiaoyi" to the electronic device, and the electronic device may also display the GUI shown in FIG. 2(b).

In some embodiments, the user may alternatively make, by pressing and holding a power button, the electronic device to display the GUI shown in FIG. 2(b).

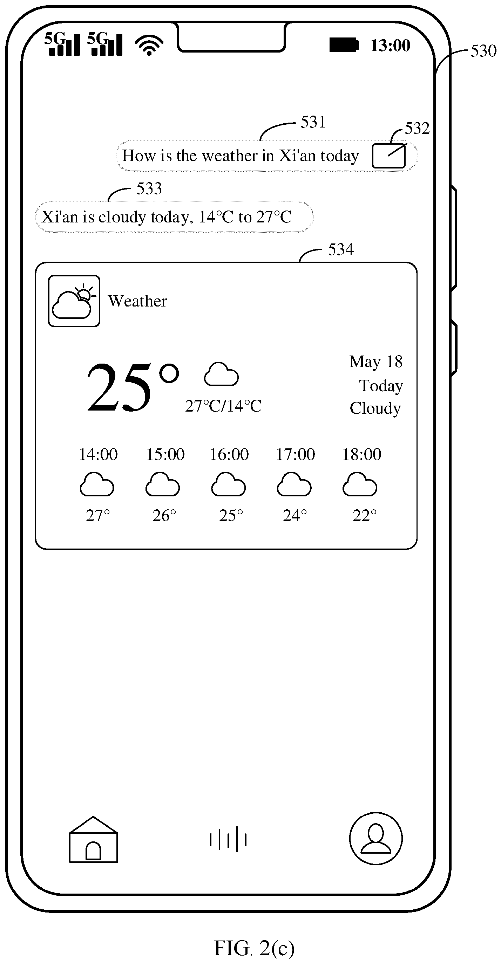

With reference to FIG. 2(b), the GUI may be a display interface 520 of the voice assistant. The display interface 520 may include a voice input control 522, and may further include other function controls 523 and 524. The display interface 520 may further include a plurality of recommendation inputs 521. When detecting that the user clicks the voice input control 522, the electronic device may display a GUI shown in FIG. 2(c).

With reference to FIG. 2(c), the GUI is a display interface 530 of a query result returned by the electronic device after the user inputs a voice instruction "How is the weather in Xi'an today". The display interface 530 may include a dialog box 531 input by the user. The dialog box 531 displays a text "How is the weather in Xi'an today?" The dialog box 531 may further include an editing control 532. When the user taps the editing control 532, the text in the dialog box may be edited. The display interface 530 may further include a dialog box 533 of the voice assistant and a weather card 534. The dialog box 533 may display a query result "Xi'an is cloudy today, 14°C to 27°C" returned by a weather application. The weather card 534 may display information such as a current temperature, a highest temperature and a lowest temperature of today, and a weather condition and temperatures of several hours in the future.

It should be understood that, when displaying the display interface 530, the electronic device may perform voice broadcast of a queried weather condition, and broadcast content may be " Xi'an is cloudy today, 14°C to 27°C".

It should be understood that, in this embodiment of this application, when the user releases the voice instruction "How is the weather in Xi'an today" to the voice assistant, the voice assistant may obtain that the intent of the user is "Query the weather", the slots are as follows: location: "Xi'an"; and time: "today". In this case, the voice assistant may invoke a system interface (for example, a synchronous interface) to transfer the intent of the user and slot information in the voice instruction to a weather application (for example, Huawei Weather), and present a queried result to the user in a manner such as voice broadcast and/or text display or card display based on information returned by weather application.

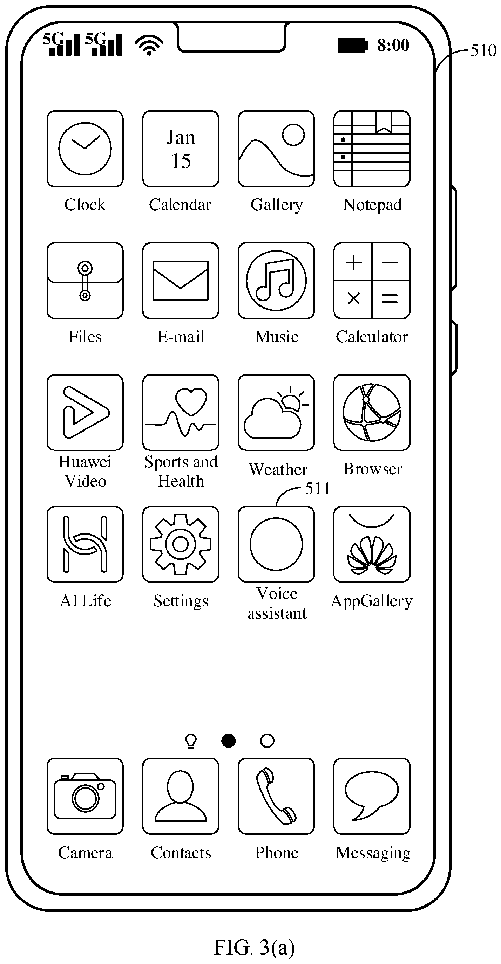

FIG. 3(a) to FIG. 3(d) are diagrams of another group of GUIs according to an embodiment of this application. FIG. 3(a) to FIG. 3(c) show a process of a voice interaction between a user and an electronic device.

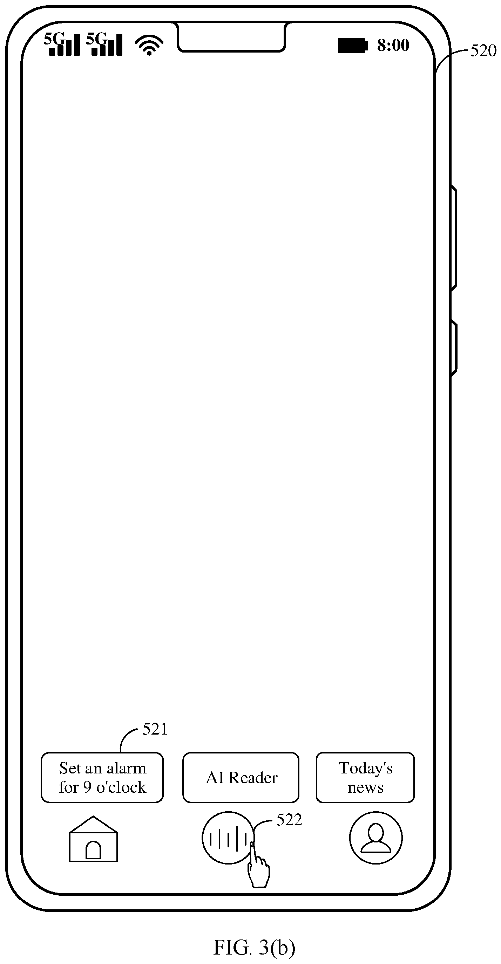

For FIG. 3(a) and FIG. 3(b), refer to related descriptions of FIG. 2(a) and FIG. 2(b). For brevity, details are not described again.

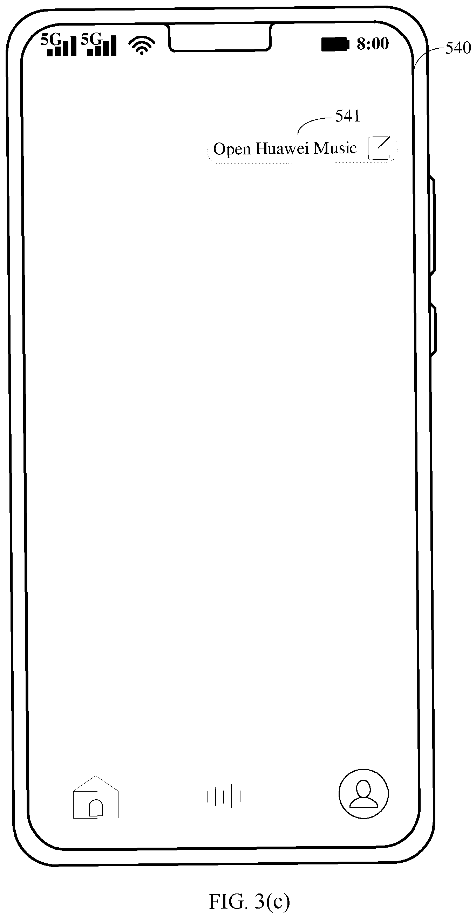

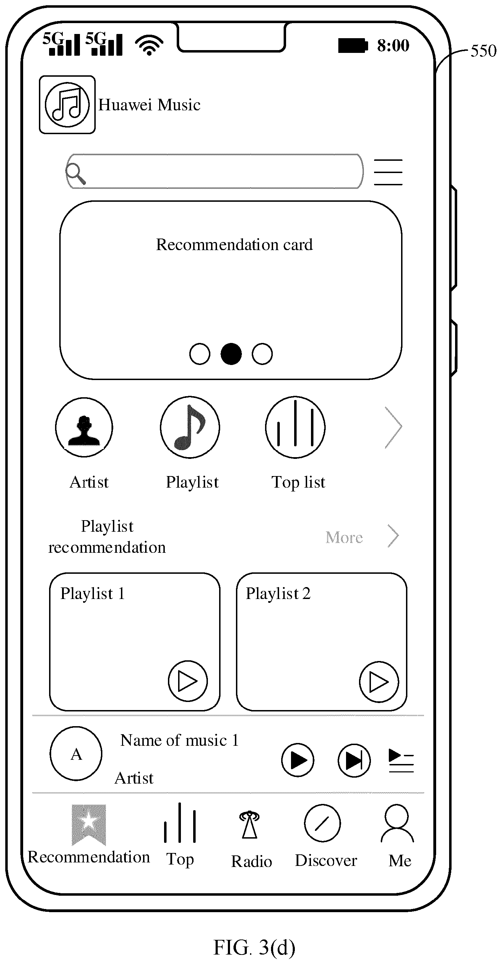

With reference to FIG. 3(c), the GUI is a display interface 540 in which the electronic device identifies that a voice instruction of the user is "Open Huawei Music". The display interface 540 may display a dialog box 541 of the identified voice instruction "Open Huawei Music" of the user, and then the electronic device may display a GUI shown in FIG. 3(d).

With reference to FIG. 3(d), the GUI is a display interface 550 of a home page of Huawei Music.

It should be understood that, in this embodiment of this application, when the user releases the voice instruction "Open Huawei Music" to the voice assistant, the voice assistant may obtain that the intent of the user is "Open an application", and the slot is "Open the Huawei Music application". In this case, the voice assistant may invoke a UI interface to transfer the slot to the Huawei Music application, so that the electronic device starts Huawei Music and displays a display interface of Huawei Music.

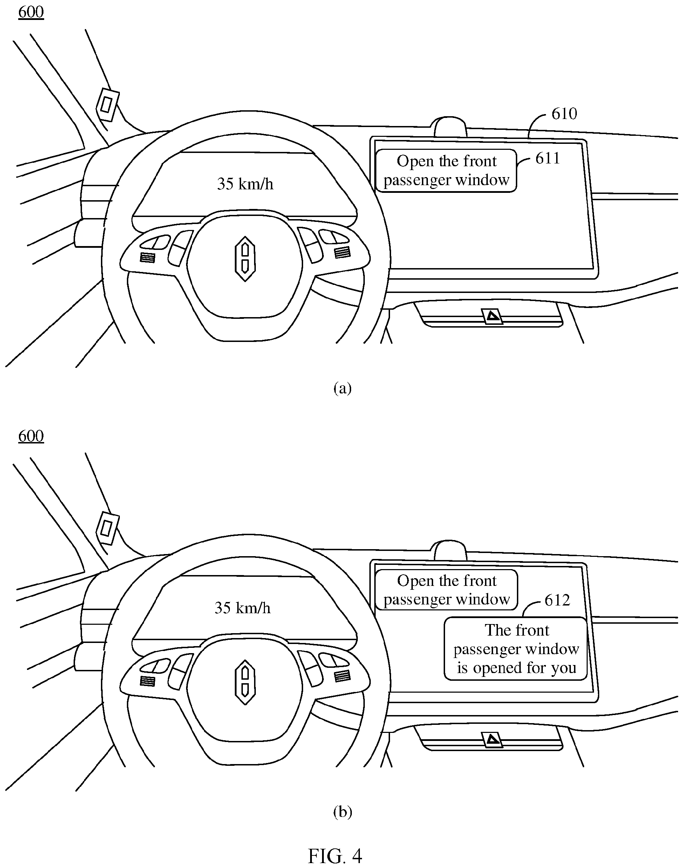

FIG. 4 is a diagram of a voice interaction between a user and an in-vehicle infotainment according to an embodiment of this application. (a) and (b) in FIG. 4 show a process of performing voice interaction between the user and the in-vehicle infotainment.

With reference to (a) in FIG. 4, an in-vehicle infotainment 600 may be in a driving process, and the user expects to open a front passenger window. In this case, the user may wake up a vehicle-mounted voice assistant. When the user inputs a voice instruction "Open the front passenger window", a dialog box 611 may be displayed in a display interface 610 of a central control screen of the in-vehicle infotainment 600, and the dialog box 611 may display the voice instruction "Open the front passenger window".

In this case, the vehicle-mounted voice assistant may invoke a vehicle-mounted control system to execute the voice instruction of the user. After the voice instruction is successfully executed, the central control screen of the in-vehicle infotainment 600 may display the display interface 620.

With reference to (b) in FIG. 4, the dialog box 611 and a dialog box 612 may be displayed in a display interface 620 of the in-vehicle infotainment 600, and content "The front passenger window is opened for you" may be displayed in the dialog box 612. In addition, the vehicle-mounted voice assistant can further perform voice broadcast of "The front passenger window is opened for you".

It should be understood that, in the process in which the user opens the vehicle window by using the voice instruction, when the user releases the voice instruction "Open the front passenger window" to the vehicle-mounted voice assistant, the vehicle-mounted voice assistant may obtain that an intent of the user is to open the vehicle window, and a slot is the front passenger location. In this case, the vehicle-mounted voice assistant may invoke an asynchronous interface to transfer the intent and slot information to the vehicle-mounted control system. The vehicle-mounted control system performs an action of opening the front passenger window. After the action is successfully performed, the vehicle-mounted voice assistant may return corresponding information to the vehicle-mounted voice assistant, and the vehicle-mounted voice assistant broadcasts "The front passenger window is opened for you" to the user through voice and/or displays text "The front passenger window is opened for you" to the user based on the corresponding information returned by the vehicle-mounted control system.

It should be further understood that when the vehicle-mounted control system executes the instruction of the user to open the vehicle window, an execution process may take several seconds. In this process, the user may further continue to release another voice instruction to the vehicle-mounted voice assistant. For example, the user continues to release a voice instruction "Adjusting the air conditioner to 25 degrees".

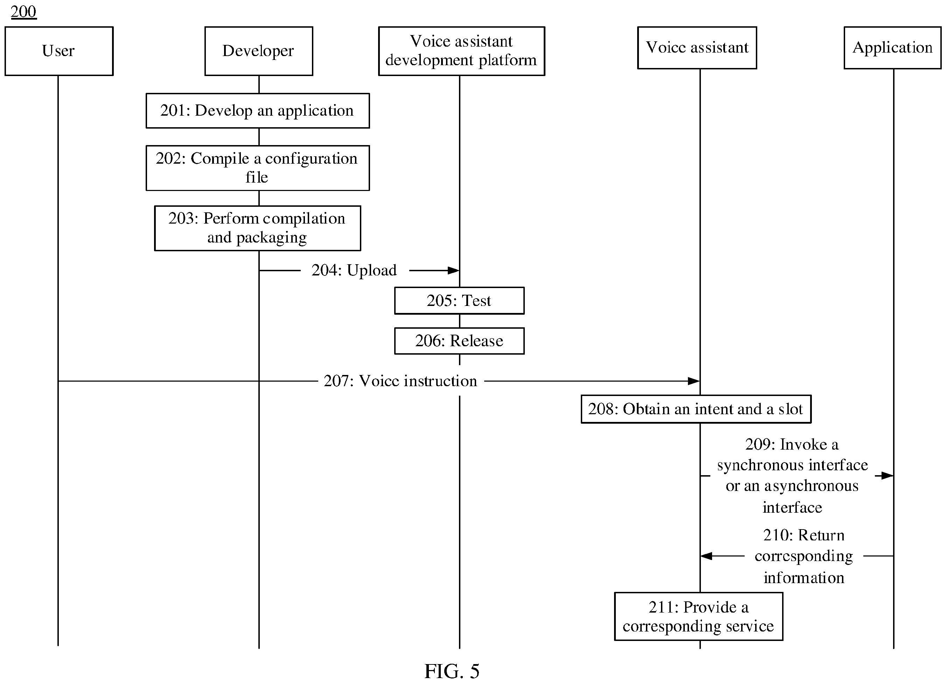

FIG. 5 is a schematic flowchart of a voice interaction method according to an embodiment of this application. As shown in FIG. 5, the method 200 may include step 201 to step 211.

The method provided in this embodiment of this application may be applied to applications in a plurality of operating systems, for example, an Android application in an Android operating system, a Harmony application in a Harmony operating system, or an application in another operating system. This is not limited in embodiments of this application.

201: Develop an application.

In some embodiments, the method 200 may not include step 201, that is, step 202 may be performed when development of an application is completed.

202: Compile a configuration file.

For example, the configuration file may be a voiceabilities.json file.

In some embodiments, a voice assistant development platform may provide an integrated development environment (Integrated development environment, IDE) plug-in for a developer of the application, and the developer of the application may compile the configuration file in the IDE plug-in.

It should be understood that the configuration file may be a mapping relationship between a voice capability and an application service. The configuration file defines a correspondence between an intent and a slot and the application service. The configuration file may further define content returned by the application to a voice assistant when a system interface is invoked by using voice, and an action performed by the content returned by a voice assistant application.

In an example, a user may define, in the configuration file, a system interface used for opening an interface, and an interface of the application may be opened by invoking the system interface used for opening the interface.

In another example, the user may define a synchronous interface and interaction content in the configuration file, and may interact with the application by invoking the synchronous interface.

It should be understood that, when the voice assistant invokes the synchronous interface to interact with the application, after the voice assistant inputs a voice instruction to the application, the voice assistant needs to wait for a feedback result of the application before executing a next voice instruction of the user.

For example, the voice assistant may interact with a weather App by invoking the synchronous interface, to query the weather. When the user inputs a voice instruction "Query the weather", the voice assistant may invoke the synchronous interface to send a weather query instruction to the weather App, receive a result returned by the weather App, and feed back the result to the user. It should be understood that the foregoing weather query process may take a short time. After the user sends the "Query the weather" instruction, the voice assistant keeps waiting for the return result of the weather App.

In another example, the user may define an asynchronous interface and interaction content in the configuration file, and may interact with the application by invoking the asynchronous interface.

It should be understood that when the voice assistant invokes the asynchronous interface to interact with the application, it may be time-consuming that the application provides a corresponding function based on the voice instruction. In this case, after the voice assistant inputs the voice instruction to the application, a next voice instruction may be input without waiting for a feedback result of the application.

For example, the voice assistant may be a vehicle-mounted voice assistant, and the user may control a vehicle by invoking the asynchronous interface through the vehicle-mounted voice assistant, for example, a vehicle-mounted air conditioner or a car window. When the user inputs a voice instruction "Open the skylight", the vehicle-mounted voice assistant may invoke the asynchronous interface to send the voice instruction to a vehicle-mounted control system. The vehicle-mounted control system opens the vehicle skylight according to the instruction. Because a process of opening the vehicle skylight is time-consuming, it may take several seconds. When execution of the vehicle-mounted control system succeeds or fails, the vehicle-mounted control system may return a result to the vehicle-mounted control system, and the vehicle-mounted voice assistant may perform voice broadcast of a corresponding result to the user.

In some embodiments, when voice access to the Harmony application is performed, for a basic configuration of the configuration file, refer to Table 1.

**Table 1**

| Label name | Label type | M/O | Default value | Description (Service effective range) |
|---|---|---|---|---|
| voiceConfig | JsonObject | M | None | Outermost label of a configuration file |
| bundleName | string | M | None | Harmony application package name |
| moduleName | string | M | None | Harmony application module name |
| label | string | M | None | Description of Harmony module information |
| packageVersion | string | O | None | Package version number |

For example:

```
          {
              "voiceConfig": {
                  "bundleName": "com.third.name";
                  "moduleName": "com.third.name";
                  "label": "Huawei Weather";
                  "voiceAbilities": [{
                      "abilityName": "com.example.voiceappdemo.VoicePageAbility";
                      "uri": "ability://my-weather.com/search?location=&time=";
                      "type": "page";
                      "unsupportedMode": ["kidsMode", "lockMode"];
                      "fulfillment": [] }] } }
```

In some embodiments, when voice access to the Android application is performed, for a basic configuration of the configuration file, refer to Table 2.

**Table 2**

| Label name | Label type | M/O | Default value | Description (Service effective range) |
|---|---|---|---|---|
| voiceConfig | JsonObject | M | None | Outermost label of a configuration file |
| packageName | string | M | None | Application package name |
| appName | string | M | None | Application name |
| packageVersion | string | M | None | Package version number |

For example:

```
          {
              "voiceConfig": {
                  "pacakgeName": "com.third.name";
                  "appName": "Huawei Weather";
                  "voiceAbilities": [{
                      "uri": "ability://my-weather.com/search?location=&time=";
                      "type": "page";
                      "unsupportedMode": ["kidsMode", "lockMode"];
                      "fulfillment": [] }] } }
```

In some embodiments, for a synchronous interface service configuration of the configuration file, refer to Table 3.

**Table 3**

| Label name | Label type | M/O | Default value | Description |
|---|---|---|---|---|
| uri | string | M | None | Access address [scheme:][//authority][path][?query][#fragm ent] of a data component uri type |
| type | string | M | None | Service type: data |
| request | JsonObject | M | NA | Configuration set of a voice request service |
| functionName | string | M | None | Name of a function entry defined by a data component for processing an intent |
| response | JsonArray | M | NA | Service-defined response configuration returned to a voice dialog |
| retCode | string | M | None | Return code. Default: 0 (success), 1 (failure), or 3 (not supported); and other customized return codes need to correspond to meanings described in the speakText field |
| displayText | string | O | None | Text content that is customized by a developer and that needs to be displayed by a voice assistant. Note that the developer can customize and select official wording |
| speakText | string | O | None | Text content that is customized by the developer and that needs to be broadcast by the voice assistant |
| displayTextId | string | O | None | Official wording ID that is selected by the developer and that is released by the voice assistant |
| speakTextId | string | O | None | Official wording ID that is selected by the developer and that is released by the voice assistant |
| cardType | string | O | None | FA: a HarmonyOS card |
| | | | | NATIVE: a local card that is defined by the voice assistant and that is released externally through a BOT open platform |
| cardParams | JsonObject | O | NA | Configuration parameter for accessing a card |
| | | | | Under the FA card, the configuration parameter is a quintuple required for accessing the FA card |
| | | | | Under the NATIVE card, the configuration parameter is a template type of the card |
| bundleName | string | M | None | Name of a package in which the card is located |
| moduleName | string | M | None | Name of a module in which the card is located |
| abilityName | string | M | None | Name of an ability in which the card is located |
| formName | string | O | None | Card name. If this is left blank, formName corresponds to a default card of FA |
| demissions | string | O | None | Size |
| snapshotUri | string | O | None | Card snapshot address |

For example: {

```
          "voiceAbilities": [{
              "uri": "dataability://com.huawei.xx.UserADataAbility",
              "type": "data",
              "unsupportedMode": ["kidsMode", "lockMode"],
              "fulfillment": [{
                  "request": {
                      "accessMapping": {
                          "intentName": "abilities.intent.CHECK_WEATHER",
                          "functionName": "checkWeather"
                      },"parametersMapping": [{
                          "slotName": "sLocation",
                          "parameterName": "location",
                          "entity": [{
                              "sourceType": "text",
                              "language": "zh",
                              "data": [{
                                  "name": "Beijing",
                                  "alias": ["imperial capital", "capital"]
                      }] }] }] },
                  "response": [{
          "retCode": "0",
                          "displayTextId": "brieftts_conditioner_set_1_2"
                          "speakTextId": "brieftts_conditioner_set_1_2 "
                          "cardType": "FA",
                          "cardParams": {
                              "bundleName": "",
                              "moduleName": "",
                              "abilityName": "",
                              "formName": "",
                              "dimensions": "",
                              "snapshotUrl": ""
                          } },
                      {
                          "retCode": "1",
                          "displayText": "execution fails",
                          "speakText": "execution fails"
              } ] }] }] }
```

In an example, when the developer configures display Text and speakText in the configuration file, specific content of display Text and speakText may be standard wording officially provided by the voice assistant, to ensure quality of the wording. The specific content of display Text and speakText can alternatively be edited by the developer, but needs to be reviewed by the voice assistant development platform, to ensure the quality of the wording.

In another example, the specific content of display Text and speakText may not be configured in the configuration file, but is returned by the application in real time when the system interface is invoked to interact with the application. The voice assistant performs text display and/or voice broadcast based on the content returned by the application.

In some embodiments, for an asynchronous interface service configuration of the configuration file, refer to Table 4.

**Table 4**

| Label name | Label type | M/O | Default value | Description |
|---|---|---|---|---|
| abilityName | string | M | None | Service class name |
| uri | string | O | None | Service action |
| type | string | M | None | Service type: service |
| cardType | string | O | None | FA: a HarmonyOS card |
| | | | | NATIVE: a local card that is defined by the voice assistant and that is released externally through a BOT open platform |
| cardParams | JsonObject | O | NA | Configuration parameter for accessing a card |
| | | | | Under the FA card, the configuration parameter is a quintuple required for accessing the FA card |
| | | | | Under the NATIVE card, the configuration parameter is a template type of the card |
| cardTemplate | string | M | None | Card template that is released on the BOT open platform |

For example:

```
          {
          "voiceAbilities": [{
          "abilityName": "com.example.voiceappdemo.ServiceAbility",
              "uri": "action.search.weather",
              "type": "service",
              "unsupportedMode": ["kidsMode", "lockMode"],
              "fulfillment": [{
                  "request": {
                      "accessMapping": {
                          "intentName": "abilities.intent.CHECK WEATHER",
                          "functionName": "checkWeather"
                      },
                      "parametersMapping": [{
                          "slotName": "sLocation",
                          "parameterName": "location",
                          "entity": [{
                              "sourceType": "text",
                              "language": "zh",
                              "data": [{
                                  "name": "Beijing",
                                  "alias": ["imperial capital", "capital"]
                      }] }] }] },
                  "response": [{
                      "retCode": "0",
                      "displayText": "execution succeeds",
                      "speakText": "execution succeeds",
                      "displayTextId": "brieftts_conditioner_set_1_2"
                      "speakTextId": "brieftts_conditioner_set_1_2"
                      "cardType": "NATIVE",
                      "cardParams": {
                          "cardTemplate": ""} }] }] }] }
```

203: Perform compilation and packaging.

The developer can compile and package a developed application and a compiled configuration file to form an application package.

204: Upload the application package and the configuration file to the voice assistant development platform.

For example, the developer may register with and log in to the voice assistant development platform, and then upload an application package and a compiled configuration file of the developer to the voice assistant development platform, so that a service provided by the application can be reviewed on the voice assistant development platform.

205: Test the application and the configuration file.

For example, the voice assistant development platform provides a test function. When the user clicks "Test", the application and the configuration file may be automatically tested, and a corresponding test report may be generated.

206: Release the application and the configuration file.

It should be understood that, after the application and the configuration file pass the test, the application and the configuration file may be released on the voice assistant development platform, or only the application may be released, to notify the user that the application and the configuration file pass the test.

In some other embodiments, the released application and configuration file may also be enabled to go offline.

In some other embodiments, the user may further delete the uploaded application and the uploaded configuration file, or an administrator of the voice assistant development platform may delete the application and the configuration file when determining that the application and the configuration file do not conform to a regulation.

The voice assistant development platform may review the developed application and the compiled configuration file of the developer, to provide a monitoring mechanism for voice access to the application. This ensures quality of a voice service, and avoids a phenomenon of non-compliance and illegalness.

207: The user sends the voice instruction to the voice assistant. Correspondingly, the voice assistant receives the voice instruction.

For example, when the user expects to query the weather, the user may send a weather query voice instruction to the voice assistant. For example, the voice instruction may be "How is the weather in Xi'an today".

208: The voice assistant obtains an intent of the user and slot information in the voice instruction based on the voice instruction.

For example, when the voice instruction is "How is the weather in Xi'an today", the voice assistant may identify that the intent of the user is "Query the weather", and the slot information in the voice instruction is as follows: location: "Xi'an"; and time: "today".

In some other embodiments, in step 208, the voice assistant may send the voice instruction to a voice assistant cloud server, and the cloud server identifies the intent of the user and the slot information in the voice instruction, and then sends the intent and the slot information to the voice assistant.

For example, the voice instruction is "How is the weather in Xi'an today", the voice assistant sends the voice instruction to the voice assistant cloud server, and the cloud server identifies that the intent of the user is "Query the weather", and the slot information in the voice instruction is as follows: location: "Xi'an"; and time: "today", and sends the intent and the slot information to the voice assistant.

209: The voice assistant invokes the synchronous interface or the asynchronous interface to send the obtained slot information to the application.

For example, when the voice instruction is "How is the weather in Xi'an today", it may be determined that the intent of the user is "Query the weather", and the slot information in the voice instruction is: location: "Xi'an"; and time: "today". In this case, the voice assistant may invoke the synchronous interface to send the identified slot information to a weather application (such as Huawei Weather).

It should be understood that the application may provide a service supported by the application for the voice assistant. For example, the weather application may provide, for the voice assistant, a service that supports weather query by the weather application. When identifying that the intent of the user is to query the weather, the voice assistant may interact with the weather application.

For example, when the voice instruction is "Open the front passenger window", it may be determined that the intent of the user is "Open a vehicle window", and the slot information in the voice instruction is: location: "the front passenger". The voice assistant may invoke the asynchronous interface to send the identified slot information to the vehicle-mounted control system.

In some embodiments, the voice assistant may transfer, to the application by using a parameter, a processing function and slot information that are defined by the application.

For example, the voice assistant may interact with the application by invoking the following synchronous interface.

Synchronous interface for interacting with the Harmony application: Bundle result = DataAbilityHelper. call(Uri uri, String method, String arg, PacMap extras).

Uri is provided by the application. The voice assistant transfers the processing function and the slot information to the application through an extras parameter of a pairwise controlled manifold approximation (pairwise controlled manifold approximation, pacMap) structure.

Synchronous interface for interacting with the Android application: Bundle result = context.getContentResolver.call(Uri uri, String method, String arg, Bundle extras).

Uri is provided by the application. The voice assistant transfers the processing function and the slot information to the application through an extras parameter of a Bundle structure.

It should be noted that a parameter name of the extras parameter is defined by the developer in the configuration file, and a corresponding value is identified by the voice assistant from the voice instruction. The extras parameter may be defined in Table 5.

**Table 5**

| Parameter name | M/O | Type | Note |
|---|---|---|---|
| Function Name (functionName) | M | Integer (int) | Function name configured in the configuration file for processing a corresponding intent of the voice assistant |
| Parameter Name (parameterName) | O | String (string) | Parameter name configured in the configuration file, which may include a plurality of names |
| Language (language) | O | String (string) | Current voice of the voice assistant. |
| | | | The application needs to refer to this voice type when returning a text, broadcasting wording, or a card. |

For example, parameters transferred by the voice assistant to the application are as follows:

```
          "callParams": {
          "functionName": "setAirConditioner";
          "temperature": "25";
          "language": "zh";
          }
```

In the foregoing example, it can be determined that the function name is: set air conditioner, the parameter name is: temperature, the temperature value is: 25, and the language is: simplified Chinese.

The voice assistant transfers the foregoing parameters to the application, and the application may determine that the user expects to adjust the air conditioner to 25 degrees, so that the temperature of the air conditioner may be adjusted based on the foregoing parameters.

In some examples, the voice assistant may interact with the Harmony application by invoking an asynchronous interface (service ability). For parameters transferred by the voice assistant to the Harmony application, refer to Table 1 to Table 4.

In some examples, the voice assistant may interact with the Android application by invoking an asynchronous interface (service). For parameters transferred by the voice assistant to the Android application, refer to Table 1 to Table 4.

210: The application returns corresponding information to the voice assistant.

In some embodiments, when the execution succeeds, the application may return 0 to the voice assistant; when the execution fails, the application may return 1 to the voice assistant; or when the type is not supported, the application may return 3 to the voice assistant.

In some other embodiments, the application may return an execution result to the voice assistant. For example, the application sends queried weather information to the voice assistant, and the voice assistant agrees to display the weather information in a text manner; or the application sends the queried weather information to the voice assistant, and the voice assistant agrees to broadcast weather information in a voice broadcast manner; or the application sends the queried weather information to the voice assistant, and the voice assistant agrees to display the weather information in a card form.

It should be understood that the return value and the corresponding meaning may be defined by the developer in the configuration file. A manner in which the voice assistant presents the result to the user may also be defined by the developer in the configuration file.

In some embodiments, for a value returned by the Harmony or Android application to the voice assistant by using the synchronous interface or the asynchronous interface, refer to Table 6.

**Table 6**

| Parameter name | M/O | Type | Note |
|---|---|---|---|
| Result code (retCode) | M | string | Return result code is executed. The voice assistant executes a corresponding service broadcast based on the result code. For example, 0 indicates that the execution succeeds, 1 indicates that the execution fails, 3 indicates that the execution is not supported, and other values can be defined in the configuration file |
| display Text | O | string | Text content that needs to be displayed by the voice assistant. |
| | | | Default content to be displayed is defined by the voice |
| | | | assistant. This field takes effect only after being configured in the configuration file |
| speakText | O | string | Content that needs to be played by the voice assistant in voice. Default content to be played is defined by the voice assistant. This field takes effect only after being configured in the configuration file |
| displayData | O | Json | When a placeholder is related in the defined text (wording) displayed by the voice assistant, this field is used to carry the placeholder and a value of the placeholder. |
| | | | For example, when an air conditioner temperature is increased, the voice assistant displays content "The air conditioner is adjusted to {temp} degrees for you" when execution succeeds. This field needs to return "displayData": |
| | | | { |
| | | | "temp": "25"; |
| | | | }. |
| speakData | O | Json | When the placeholder is related in the defined text (wording) broadcast by the voice assistant, this field is used to carry the placeholder and the value of the placeholder. |
| | | | For example, when an air conditioner temperature is increased, the voice assistant broadcasts content "The air conditioner is adjusted to {temp} degrees for you" when execution succeeds. This field needs to return "speakData": { |
| | | | "temp": "25"; |
| | | | }. |
| cardTemplate | O | string | Template corresponding to a card that needs to be displayed by the voice assistant. The template is specified in the configuration file by default. If an experience program needs to temporarily specify a template that is different from the template during running, the experience program needs to be configured in the configuration file |
| cardData | O | Json | Card data that needs to be displayed by the voice assistant. A data structure is defined by the voice assistant and then |
| | | | released externally |

Example 1: In a scenario of setting the air conditioner temperature, voice broadcast wording and text display content are defined by the developer in the configuration file. When the application successfully sets the temperature, only the return result code defined in the configuration file needs to be returned to the voice assistant.

When the application is a Harmony application, an example of a part of code of example 1 is as follows:

```
          private PacMap setAirConditioner(String temp){
              //Service logic
              //retCode of successful return
              PacMap map = new PacMap();
              map.putString("retCode", "0");
              return map;
          }
```

When the application is an Android application, an example of a part of the code of example 1 is as follows:

```
          private Bundle setAirConditioner(String temp){
              //Service logic
              //retCode for return of success
              Bundle map = new Bundle();
              map.putString("retCode", "0");
              return map;
          }
```

In Example 1, when the return result code returned by the application to the voice assistant is "0", the voice assistant may broadcast to the user that the execution succeeds.

Example 2: In a scenario of setting the air conditioner temperature, voice broadcast wording and text display content are defined by the developer in the configuration file. When the application successfully sets the temperature, the placeholder defined in the configuration file needs to be returned to the voice assistant.

When the application is a Harmony application, an example of a part of code of example 2 is as follows:

```
          private PacMap setAirConditioner(String temp){
              //Service logic. It is assumed that temp1 represents a temperature at which
    execution of a service actually takes effect.
              PacMap map = new PacMap();
              map.putString("retCode", "0");
              ZSONObject data = new ZSONObject();
              data.put("temperature", temp1); //
"temperature" is a placeholder defined by a skill
    broadcast and display wording of setting an air conditioner temperature.
              map. putString("displayData",data.toString());
              map. putstring("speakdata",data.toString);
              return map;
          }
```

When the application is an Android application, an example of a part of the code of example 2 is as follows:

```
          private Bundle setAirConditioner(String temp){
              //Service logic
              //retCode for return of success
              Bundle map = new Bundle();
              map.putString("retCode", "0");
              return map;
          }
```

In Example 2, it is assumed that the user expects to increase the air conditioner temperature to 35 degrees. The application determines that the temperature of 35°C is too high, and may cause discomfort to the user. In this case, the application may adjust the actual effective temperature temp1 of the air conditioner to 25°C, and then return a result code 0 and a placeholder 25 to the voice assistant. The voice assistant adds the placeholder 25 to the wording "The air conditioner temperature is adjusted to {temp1} degrees for you", and broadcasts the wording to the user.

In some other examples, it is assumed that the user expects to adjust a progress bar of a video that is being played to 19.5, and a minimum adjustment unit of the progress bar supported by a video application is 1. The application may adjust an actual value of the progress bar to 19, and then return a result code 0 and a placeholder 19 to the voice assistant. The voice assistant adds the placeholder 19 to wording "The video progress bar is adjusted to {jindu} for you", and broadcasts the wording to the user.

Example 3: In a scenario of setting the air conditioner temperature, voice broadcast wording and text display content are not defined in the configuration file, but are returned in real time when the application executes the voice instruction.

When the application is a Harmony application, an example of a part of code of example 3 is as follows:

```
          private Bundle setAirConditioner(String temp){
              //Service logic
              Bundle map = new Bundle();
              map.putString("retCode", "0");
              map.putString("displayText", "The air conditioner is adjusted to" + temp +
    "degrees");
              map.putString("speakText", "The air conditioner is adjusted to" + temp +
    "degrees");
              return map;
          }
```

When the application is an Android application, an example of a part of the code of example 3 is as follows:

```
          private Bundle setAirConditioner(String temp){
              //Service logic
              Bundle map = new Bundle();
              map.putString("retCode", "0");
              map.putString("displayText", "The air conditioner is adjusted to " + temp +
    "degrees");
              map.putString("speakText", "The air conditioner is adjusted to " + temp +
    "degrees");
              return map;
          }
```

In Example 3, it is assumed that the voice instruction of the user is "Adjust the air conditioner to 25 degrees". After the application successfully sets the air conditioner temperature, the broadcast wording "The air conditioner is adjusted to 25 degrees for you" or the text display content "The air conditioner is adjusted to 25 degrees for you" or the content displayed by the card is returned to the voice assistant. Based on the result returned by the application, the voice assistant broadcasts "The air conditioner is adjusted to 25 degrees for you" to the user when voice broadcast needs to be performed. The voice assistant displays the text content "The air conditioner is adjusted to 25 degrees for you" on a display when the text content needs to be displayed. The voice assistant displays related content when the card needs to be displayed.

Example 4: In a scenario of setting the air conditioner temperature, voice broadcast wording and text display content are defined by the developer in the configuration file. When the application fails to set the temperature, only the return result code defined in the configuration file needs to be returned to the voice assistant.

When the application is a Harmony application, an example of a part of code of example 4 is as follows:

```
          private Bundle setAirConditioner(String temp){
              //Service logic
              //retCode for return of an error
              Bundle map = new Bundle();
              map.putString("retCode", " 1"); //An
error type indicated by a return value is within
    a range of wording defined by a skill of setting
the air conditioner temperature of the voice
    assistant, and is configured in the configuration file
              return map;
          }
```

When the application is an Android application, an example of a part of the code of example 4 is as follows:

```
          private Bundle setAirConditioner(String temp){
              //Service logic
              //retCode for return of an error
              Bundle map = new Bundle();
              map.putString("retCode", " 1"); //An
error type indicated by a return value is within
    a range of wording defined by a skill of setting
the air conditioner temperature of the voice
    assistant, and is configured in a configuration
phase of a configuration file (VoiceAbilities.j son)
              return map;
          }
```

In Example 4, when the return result code returned by the application to the voice assistant is "1", the voice assistant may broadcast to the user that the execution fails.

Example 5: In a scenario of setting the air conditioner temperature, when the application fails to set the temperature, and the error type exceeds voice officially defined by the voice assistant, broadcast wording and text display content are freely defined by the developer in the configuration file.

When the application is a Harmony application, an example of a part of code of example 5 is as follows:
Example of customized wording of Voiceabilities:

```
"retCode": 18;
          "displayText": "The air conditioner filter element needs to be replaced";
          "speakText": "The air conditioner filter element needs to be replaced";
              private Bundle setAirConditioner(String temp){
              //Service logic
              //retCode for return of an error
              Bundle map = new Bundle();
              map.putString("retCode", "18");
              return map;
          }
```

When the application is an Android application, an example of a part of the code of example 5 is as follows:
Example of customized wording of Voiceabilities:

```
          "retCode": 18;
          "displayText": "The air conditioner filter element needs to be replaced";
          "speakText": "The air conditioner filter element needs to be replaced";
          private Bundle setAirConditioner(String temp){
              //Service logic
              //retCode for return of an error
              Bundle map = new Bundle();
              map.putString("retCode", "18");
              return map;
          }
```

In Example 5, the user can define in the configuration file that when the return result code "retCode" is "18", the text display content of the voice assistant is "The air conditioner filter element needs to be replaced", and the voice broadcast content is "The air conditioner filter element needs to be replaced". When the application returns the result code "18" to the voice assistant, the voice assistant may perform, based on content configured in the configuration file, text display of "The air conditioner filter element needs to be replaced" and/or perform voice broadcast of "The air conditioner filter element needs to be replaced".

211: The voice assistant provides a corresponding service.

For example, the voice assistant feeds back the information returned by the application to the user. For example, when the voice instruction of the user is "How is the weather in Xi'an today", based on information "Xi'an today is cloudy, and the temperature is 15 degrees to 20 degrees" returned by the weather application, the voice assistant may broadcast "Xi'an is cloudy today, and the temperature is 15 degrees to 20 degrees" to the user through voice, or the voice assistant may display text "Xi'an is cloudy today, and the temperature is 15 degrees to 20 degrees" on a screen of an electronic device, or the voice assistant may display a weather card on the screen of the electronic device, and may include the foregoing information "Xi'an is cloudy today, and the temperature is 15 degrees to 20 degrees".

For example, with reference to FIG. 2(c), when the user inputs the voice instruction "How is the weather in Xi'an today", the voice assistant transfers the intent of the user and the slot information in the voice instruction to the weather application by using the synchronous interface, and may perform text display of "Xi'an is cloudy today, 14°C to 27°C" to the user based on the result returned by the weather application, and display a weather card 534. The voice assistant may also perform voice broadcast of "Xi'an is cloudy today, 14°C to 27°C."

In another example, when the voice instruction of the user is "Adjust the air conditioner to 25 degrees", the voice assistant returns a value "25" of the placeholder based on a control application. In this case, the voice assistant adds "25" into the wording "The air conditioner is adjusted to {} degrees for you", and may display the text "The air conditioner is adjusted to 25 degrees for you" on the screen of the electronic device, or the voice assistant may broadcast "The air conditioner is adjusted to 25 degrees for you" to the user through voice, or the voice assistant may display a card on the screen of the electronic device, and content on the card may include the information "The air conditioner is adjusted to 25 degrees for you".

It should be understood that a manner in which the voice assistant feeds back the result to the user may be predefined, for example, may be defined by the developer in the configuration file.

In some embodiments, an execution sequence of step 201 to step 211 is not limited. Some steps in step 201 to step 211 may be deleted, not performed, replaced, or exchanged. This is not limited in embodiments of this application.

In this embodiment of this application, in a voice interaction technical solution, a developer may compile a configuration file. The file may define a correspondence between an intent and a slot and an application service. The configuration file may further define content returned by an application to a voice assistant when a system interface is invoked by using voice, and an action performed by the voice assistant based on the content returned by the application.

In this embodiment of this application, a voice assistant development platform is provided for the developer, so that a developed application and a configuration file of the developer can be reviewed, thereby ensuring quality of a voice service.

In this embodiment of this application, the developer may define, in the configuration file, three different system interfaces that are invoked by the voice assistant to interact with the application, and interaction content, to provide a standard specification of voice access for the application, and reduce complexity of interconnection between the voice assistant and different applications.

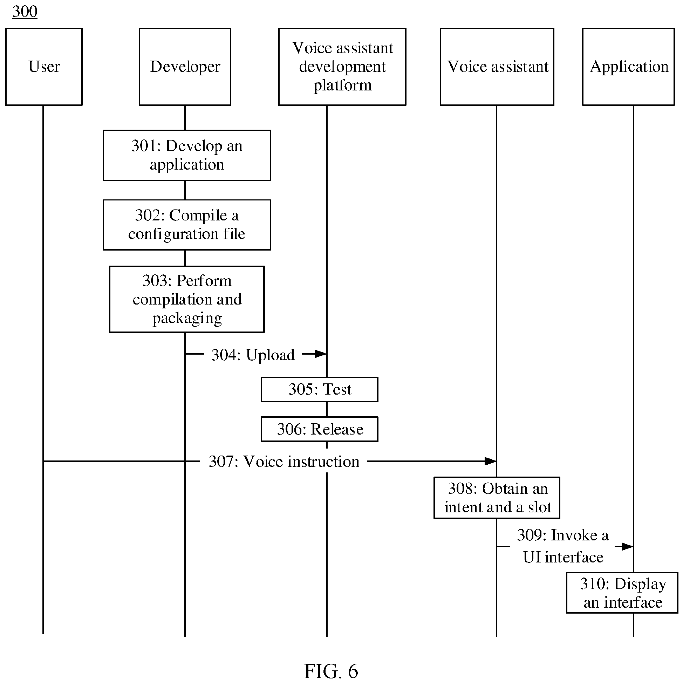

With reference to FIG. 5, the foregoing describes a technical solution in which a voice assistant interacts with an application by invoking a synchronous interface and an asynchronous interface during voice interaction. With reference to FIG. 6, the following describes a technical solution in which a voice assistant invokes a system to open an interface of an application during voice interaction.

FIG. 6 is a schematic flowchart of another voice interaction method according to an embodiment of this application. As shown in FIG. 6, the method 300 may include step 301 to step 310.

301: Develop an application.

It should be understood that, for step 301, refer to related descriptions of step 201. For brevity, details are not described again.

302: Compile a configuration file.

For example, the configuration file may be a voiceabilities.json file.

In some embodiments, a voice assistant development platform may provide an IDE plug-in for a developer of the application, and the developer of the application may compile the configuration file in the IDE plug-in.

The configuration file may include a UI interface defined by a user, and content that the voice assistant interacts with an application by using the UI interface. For example, the voice assistant may open a display interface of an application by invoking the UI interface.

303: Perform compilation and packaging.

304: Upload an application package and the configuration file to the voice assistant development platform.

305: Test the application and the configuration file.

306: Release the application and the configuration file.

307: The user sends a voice instruction to the voice assistant. Correspondingly, the voice assistant receives the voice instruction.

308: The voice assistant obtains an intent of the user and slot information in the voice instruction based on the voice instruction.

It should be understood that, for steps 303 to 308, refer to related descriptions of steps 203 to 208. For brevity, details are not described again.

309: The voice assistant sends the obtained slot information to the application by invoking a UI interface.

For example, when a voice instruction of the user is "Open Huawei Video", the voice assistant may obtain that an intent of the user is "Open Huawei Video", and slot information in the voice instruction is to open an application: "Huawei Video". The voice assistant can invoke the UI interface to transfer the slot information to Huawei Video.

In some embodiments, the voice assistant may open an interface of a Harmony application by invoking the following interface:
startAbility(new Intent(String, Uri)).

Uri is provided by the application. For example, Uri may be an access address of a display interface of the application. The voice assistant may transfer identified slot information to the application by using Uri.

An example of a part of code is as follows:

```
          Public class PageAbility extends Ability {
              @Override
              public void onStart(Intent intent) {
                  Uri mSourceUri = intent.getUri();
                  if(mSourceUri != null){
                      Set<String>queryParams = mSouceUri.getQueryParamNames();
                          if(queryParams.size()>0){
                              if(queryParams.contains("location"){
                      StringlocationStr = SourceUri.getFirstQueryParamByKey ("loaction");
                      //is a JsonString structure} }
                  }
              }
          }
```

In some embodiments, the voice assistant may open an interface of an Android application by invoking the following interface:
startActivity(new Intent(String, Uri)).

Uri is provided by the application. For example, Uri may be an access address of a display interface of the application. The voice assistant may transfer identified slot information to the application by using Uri.

For example, when the voice assistant identifies that the slot information in the voice instruction is to open Huawei Video, the voice assistant may invoke the interface to transfer an access address of a home page display interface of Huawei Video to Huawei Video, to open Huawei Video.

An example of a part of code is as follows:

```
          Public class DemoActivity extends Activity {
              @Override
              public void onCreate(Bundle savedInstanceState){
                  Intent mIntent = getIntent();
                  Set<String> queryParams = mIntent.getData().getQueryParamName();
                  if(queryParams.size()>0){
                      if(queryParams.contains("location"){
                          String locationStr = mIntrent.getData().getQueryParameter
                          ("loaction"); //is a JsonString structure
          } } } }
```

A configuration in AndroidManifest.xml is as follows:

```
          <activity android: name = "DemoActivity"
          android:exported = "true">
          <intent-filter>
          <action android:name = "android.intent.action.VIEW"/>
          <category android:name = "android.intent.category.DEFALTLT"/>
          <category android:name = "android.intent.category.BROWSABLE"/>
          <data
          android: scheme = "voicePage"
          android:host = "homepage"
          android:pathprefix = "/weather"/>
          </intent-filter>
          </activity>
```

310: The application displays a target interface based on the slot information.

The application opens the target interface based on the slot information sent by the voice assistant.

For example, when the application determines, based on the slot information, that the voice assistant sends an access address of a home page display interface of Huawei Music, Huawei Music is started to display the home page display interface of Huawei Music.

For example, with reference to FIG. 3(c) and FIG. 3(d), when the user inputs a voice instruction "Open Huawei Music", an electronic device starts Huawei Music, and displays the home page display interface of Huawei Music.

In some embodiments, an execution sequence of step 301 to step 310 is not limited. Some steps in step 301 to step 310 may be deleted, not performed, replaced, or exchanged. This is not limited in embodiments of this application.

In some other embodiments, the method 300 may be combined with the method 200. To be specific, a developer may define, in a configuration file, a UI interface, a synchronous interface, an asynchronous interface, and content of interaction with an application by invoking the UI interface, the synchronous interface, and the asynchronous interface. The voice assistant may obtain corresponding intent and slot information based on a voice instruction of a user, and invoke a corresponding system interface to interact with the application.

In this embodiment of this application, a voice assistant development platform is provided for the developer, so that a developed application and the configuration file of the developer can be reviewed, thereby ensuring quality of a voice service.

In this embodiment of this application, the developer may define, in the configuration file, a system interface that is invoked by a voice assistant to open an application interface to interact with the application, to provide a standard specification of voice access for the application, and reduce complexity of interconnection between the voice assistant and different applications.

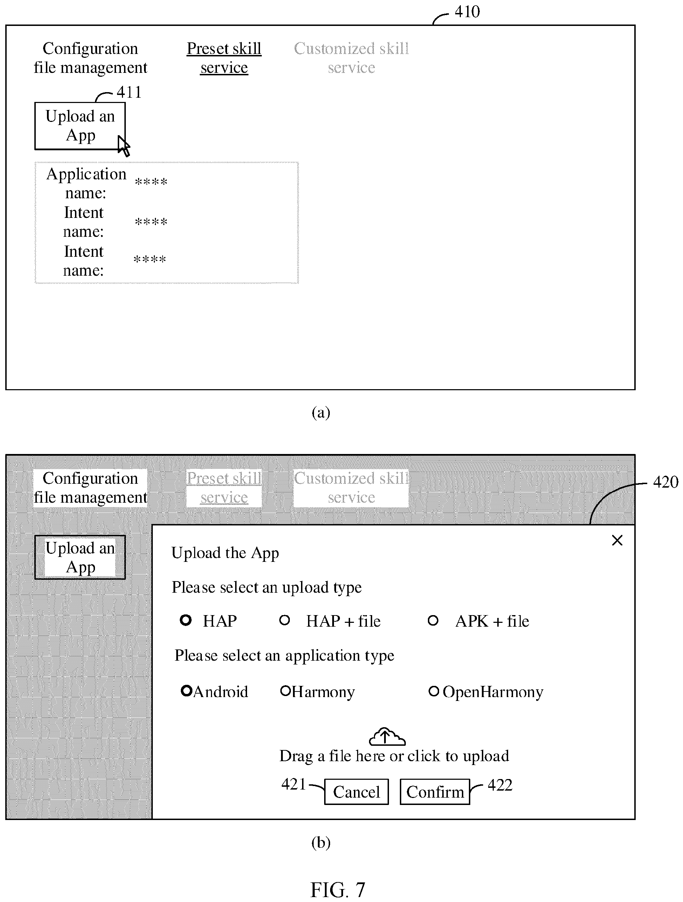

FIG. 7 is a diagram of a group of graphical user interfaces (graphical user interfaces, GUIs) according to an embodiment of this application. (a) and (b) in FIG. 7 show a process in which a developer uploads an application and compiles a configuration file on a voice assistant development platform.

With reference to (a) in FIG. 7, a GUI may be a display interface 410 of a configuration file management module of the voice assistant development platform. The display interface 410 may include configuration content of the configuration file. For example, the developer may fill in a corresponding application name, intent name, and the like under a platform threshold skill service.

In some embodiments, the display interface 410 may further include the foregoing system interface used for interaction with the application, returned content, and the like.

In some embodiments, the voice assistant development platform also supports the developer in customizing a skill service. For example, when clicking a customized skill service in the display interface 410, the developer may perform editing on a jumped page, for example, an application name of an application, an intent, and an access address transmitted by invoking a UI interface.

After an operation of the developer clicking a control 411 by using the mouse, a GUI shown in (b) in FIG. 7 may be displayed.

With reference to (b) in FIG. 7, in a display interface 420, three types of files to be uploaded may be included for selection by the developer, which are respectively: a Harmony application HAP, a Harmony application + configuration file, and an Android application APK + configuration file. For example, a user selects the Harmony application HAP. The display interface 420 further includes application types uploaded by the user, which are respectively Android (Android), Harmony (Harmony), and OpenHarmony (OpenHarmony). For example, the user selects Android. The display interface 420 may further include an upload icon and a text "Drag a file here or click to upload" that are used to upload the file. The display interface 420 may further include a cancel function control 421 and a confirm function control 422. When the developer clicks the cancel function control 421, uploading may be canceled. When the developer clicks the confirm function control 422, an uploaded file may be saved, and a next interface is jumped to.

In some embodiments, the voice assistant development platform may further test the application and the configuration file that are uploaded by the developer, and may generate a test report. The voice assistant development platform may further perform operations such as releasing, taking offline, and deleting on the application.

In this embodiment of this application, the voice assistant development platform may review and test the application uploaded by the developer and the configuration file written by the developer. When the review or the test fails, the application may be taken offline, and use of the voice assistant by the application is rejected, so that a monitoring mechanism can be provided for voice interaction. This ensures quality of a voice service, and avoids a phenomenon of non-compliance and illegalness.

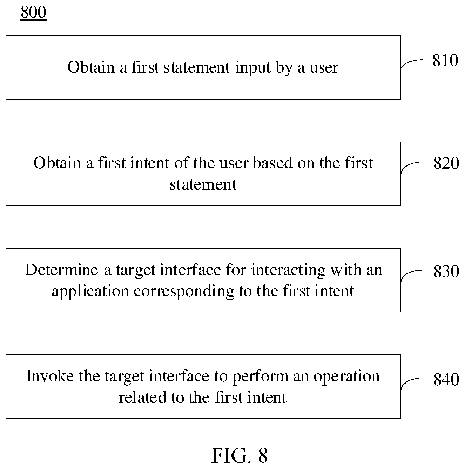

FIG. 8 is a schematic flowchart of a voice interaction method according to an embodiment of this application. As shown in FIG. 8, the method 800 may be applied to a voice interaction system, and the method 800 may include steps 810 to 840.

810: Obtain a first statement input by a user.

In some embodiments, the first statement may be input by the user by using voice, or may be input by using text, or may be input in a manner of a picture or the like. This is not specifically limited in this embodiment of this application.

For example, with reference to FIG. 2(a) to FIG. 2(c), the first statement may be "How is the weather in Xi'an today" input by the user by using voice.

820: Obtain a first intent of the user based on the first statement.

In some embodiments, the voice interaction system includes an electronic device. After obtaining the first statement, the electronic device may parse the first statement to obtain the first intent of the user.

In some other embodiments, the voice interaction system includes an electronic device and a server. After obtaining the first statement, the electronic device may send the first statement to a cloud server (for example, a voice assistant cloud server), and the cloud server parses the first statement to obtain the first intent, and then sends the first intent to the electronic device.

In some other embodiments, the voice interaction system may alternatively be a server.

830: Determine a target interface for interacting with an application corresponding to the first intent.

In some embodiments, the target interface may include one or more of a UI interface, a synchronous interface, and an asynchronous interface.

It should be understood that the target interface may be a system interface, or may be a customized interface. For example, the target interface may be a system interface of the electronic device; or when the voice assistant is integrated into an application in a form of SDK, the target interface may be a customized interface for interacting with the SDK. This is not limited in embodiments of this application.

840: Invoke the target interface to perform an operation related to the first intent.

In an example, the target interface may be a UI interface, and the electronic device may invoke the UI interface to open a display interface of the application.

With reference to FIG. 3(a) to FIG. 3(d), the first statement of the user may be open Huawei Music, and the electronic device may invoke the UI interface to open a display interface 550 of the Huawei Music application.

In another example, the target interface may be a synchronous interface, and the electronic device may interact with a corresponding application by using the synchronous interface.

With reference to FIG. 2(a) to FIG. 2(c), the first statement of the user may be "How is the weather in Xi'an today", and the electronic device may invoke the synchronous interface to interact with a weather application, and output an execution result to the user.

In another example, the target interface may be an asynchronous interface, and the electronic device may interact with a corresponding application by using the asynchronous interface.

With reference to FIG. 4, the electronic device may be installed in an in-vehicle infotainment, or the method may be directly applied to an in-vehicle infotainment. The application may be a control application or a vehicle-mounted system application. When the user inputs a statement "Open the front passenger window", an operation of opening the front passenger window may be performed by using the asynchronous interface, and an execution result is output to the user after the operation is completed.

In this embodiment of this application, in response to a voice operation of the user, the voice interaction system may determine the interface for interacting with the application corresponding to the first intent of the user, and then interact with the corresponding application by invoking the interface, to perform the operation related to the first intent of the user. According to the technical solution, when the user interacts with the voice interaction system by using voice, the voice interaction system may interact with different applications by using different interfaces. This can reduce complexity of interaction between the voice interaction system and different applications.

In this embodiment of this application, when the application uses a voice function, the voice assistant SDK does not need to be integrated, so that development complexity of the application can be further reduced.

In some embodiments, the voice interaction system further includes a configuration file, the configuration file includes a mapping relationship between the first intent and the target interface, and the determining a target interface for interacting with an application corresponding to the first intent includes: determining, based on the configuration file, the target interface for interacting with the application corresponding to the first intent.

In some embodiments, the configuration file may be predefined. For example, the configuration file may be written by a developer of the application to facilitate voice access. An interface used for interaction between the application and the voice assistant and interaction content may be configured in the configuration file, so that the electronic device can determine the target interface for interacting with the application.

In this embodiment of this application, the configuration file may be pre-stored in the voice interaction system, and the configuration file may include the mapping relationship between the first intent and the target interface, so that the target interface for interacting with the application corresponding to the first intent can be determined.

In some embodiments, the target interface is a synchronous interface or an asynchronous interface, and the invoking the target interface to perform an operation related to the first intent includes: invoking the synchronous interface or the asynchronous interface, to transfer the first intent and slot information corresponding to the first intent to the application; determining, based on a configuration file and a first result returned by the application, a first manner for outputting; and outputting an execution result of the first intent based on the first manner.

For example, with reference to FIG. 2(a) to FIG. 2(c), when the first statement is "How is the weather in Xi'an today", it may be determined that the first intent is "Query the weather", and the slot information corresponding to the first intent is: time: today; and location: Xi'an. The electronic device may invoke the synchronous interface to transmit the first intent and the slot information to the weather application. After receiving the first intent and the slot information, the weather application performs weather query, and then returns a queried result to the electronic device. Correspondingly, the electronic device presents the queried result to the user. The queried result may be presented to the user in a manner of voice broadcast, text display, card display, or the like.

For example, with reference to FIG. 4, the first statement may be "Open the front passenger window", and it may be determined that the first intent of the user is "Open the front passenger window", and the corresponding slot information is location: the front passenger. In this case, a vehicle-mounted electronic device may invoke the asynchronous interface to transmit the first intent and the slot information to a control application. After receiving the first intent and the slot information, the control application performs an operation of opening the front driver window. After the operation is completed, the control application returns an execution result to the vehicle-mounted electronic device, and the vehicle-mounted electronic device presents the execution result to the user.

In this embodiment of this application, when the target interface is a synchronous interface or an asynchronous interface, the voice interaction system may invoke the synchronous interface or the asynchronous interface to transfer the first intent of the user and the slot information corresponding to the first intent to the application, determine, based on a result returned by the application, a first manner for presenting to the user, and present an execution result of the first intent to the user in the first manner, so that a corresponding service can be provided for the user.

In some embodiments, when the target interface is a synchronous interface, before determining, based on a configuration file and a first result returned by the application, a first manner for outputting, the method may further include: refusing to invoke the target interface to perform an operation related to a second intent, where the second intent is determined based on a second statement input by the user.

In this embodiment of this application, when the target interface is a synchronous interface, before the operation corresponding to the first intent is completed, the voice interaction system cannot synchronously execute the second intent of the user, to prevent a sequence disorder of voice interaction from affecting user experience.

In some embodiments, when the target interface is an asynchronous interface, the determining, based on a configuration file and a first result returned by the application, a first manner for outputting, the method may further include: invoking the target interface to perform an operation related to a second intent, where the second intent is determined based on a second statement input by the user.

In some embodiments, when the first intent of the user is a related intent of controlling a device, for example, setting an air conditioner temperature, opening or closing a vehicle window, or controlling a curtain, the first intent is generally executed by invoking the asynchronous interface.

In this embodiment of this application, when the target interface is an asynchronous interface, before the operation corresponding to the first intent is completed, the user may continue to release a voice instruction, and the voice interaction system may synchronously execute the second intent of the user, to improve voice interaction efficiency.

In some embodiments, the first result includes first information, the first information indicates an execution result of the application, and the outputting an execution result of the first intent based on the first manner includes: determining, by an electronic device, the execution result based on the configuration file and the first information; and outputting the execution result in the first manner.

For example, the first information may be a return result code. For example, a return result code 0 corresponds to that the execution succeeds, and a return result code 1 corresponds to that the execution fails. Alternatively, the first information may be indication information indicating that the execution succeeds or fails. This is not limited in embodiments of this application. The first information may be defined in the configuration file.

In this embodiment of this application, the voice interaction system may determine the execution result based on the configuration file and the first information, and present the execution result to the user, to provide the corresponding service for the user.

In some embodiments, the first result includes a placeholder information, and the outputting an execution result of the first intent based on the first manner includes: determining the execution result based on the configuration file and the placeholder information; and outputting the execution result in the first manner.

For example, it is assumed that the user expects to adjust a progress bar of a video that is being played to 19.5, and a minimum adjustment unit of the progress bar supported by a video application is 1. The video application may adjust an actual value of the progress bar to 19, and then return a result code 0 and a placeholder 19 to the voice assistant. The voice assistant adds the placeholder 19 to wording "The video progress bar is adjusted to {jindu} for you", and broadcasts the wording to the user.

In this embodiment of this application, the first result returned by the application may include the placeholder information. In this case, a complete execution result may be determined based on both content configured in the configuration file and the placeholder information, and the execution result is presented to the user, to provide the corresponding service for the user.

In some embodiments, the first result includes content of the first manner, and the outputting an execution result of the first intent based on the first manner includes: outputting the execution result in the first manner.

For example, in some scenarios, the user expects that a queried result changes in real time. For example, during weather query, the weather changes in real time. In this case, when performing weather query, the weather application may return a weather queried result to the electronic device in real time, for example, "Xi'an is sunny today, 15 degrees to 25 degrees". When receiving the information, the electronic device presents the queried result to the user in a manner of text display, voice broadcast, card display, or the like.

In this embodiment of this application, in some cases, content corresponding to the intent of the user changes in real time (for example, weather). In this case, the first result returned by a target application may further include specific content (for example, a real-time weather condition) of the execution result, and the first result may directly be presented to the user, to provide the corresponding service for the user.

In some embodiments, the first manner includes at least one of the following: text display, voice broadcast, and card display.

In some embodiments, the target interface is a UI interface, and the invoking the target interface to perform an operation related to the first intent includes: invoking the UI interface to transfer the first intent and slot information corresponding to the first intent to the application; and displaying a target display interface of the application, where the target display interface is a display interface that corresponds to the first intent and the slot information corresponding to the first intent.

For example, with reference to FIG. 3(a) to FIG. 3(d), when the first statement is "Open Huawei Music", it may be determined that the first intent is to open an application, and the corresponding slot information is application: Huawei Music. In this case, the electronic device may invoke the UI interface to transfer the first intent and the slot information to Huawei Music, and display a home page display interface of Huawei Music.

In this embodiment of this application, when the target interface is a UI interface, the first intent and the slot information corresponding to the first intent may be an access address of a display interface, so that a corresponding display interface can be opened based on the access address.

In some embodiments, the obtaining a first intent of the user based on the first statement includes: sending the first statement to a cloud server; and receiving the first intent obtained by the cloud server by parsing the first statement.

In this embodiment of this application, after obtaining the first statement, the electronic device may send the first statement to the cloud server, and the cloud server parses the first statement to obtain the first intent, and sends the first intent to the electronic device, so that complexity of processing the first statement by the electronic device can be reduced.

In some embodiments, the configuration file is predefined.

For example, the configuration file may be a file that is written by the developer of the application based on a service that can be provided by the application. For example, the configuration file may be stored in a voice assistant cloud server, or the configuration file may be integrated with the application.

In this embodiment of this application, a developer of the application may compile the configuration file based on the service that can be provided by the application, for access of a voice assistant of the electronic device. This technical solution may provide convenience for voice access to the application.

An embodiment of this application further provides a voice assistant development platform. The voice assistant development platform may be configured to receive a first file. The first file includes an application and a configuration file. The configuration file includes a mapping relationship between a first intent and a target interface. The target interface is an interface for interaction between a voice assistant and the application. The target interface is one or more of a synchronous interface, an asynchronous interface, or a UI interface. The voice assistant development platform is further configured to: when it is determined that the first file meets a preset condition, send the first file or the configuration file to a voice assistant cloud server for a voice interaction service.

It should be understood that the target interface may be a system interface, or may be a customized interface. For example, the target interface may be a system interface of an electronic device; or when the voice assistant is integrated into the application in a form of SDK, the target interface may be a customized interface for interacting with the SDK. This is not limited in embodiments of this application.

In some embodiments, the first file may alternatively include only the application, and the configuration file may be included in the application.

For example, with reference to FIG. 5, the first file may include the application and the configuration file. A developer may compile and pack the first file, and then upload the first file to the voice assistant development platform. The voice assistant development platform may test the first file. When it is determined that the first file meets the preset condition, the first file or the configuration file may be sent to the voice assistant cloud server for the voice interaction service.

It should be understood that the preset condition may be whether wording or a language expression manner in the configuration file is legal and compliant, or the preset condition may be whether the application is an application that has been reviewed by a formal platform, or the like.

In an embodiment of this application, a user or the developer may upload the first file including the application and the configuration file to the voice assistant development platform, and the voice assistant development platform may test the first file to determine whether the first file meets a requirement, to review the first file, and ensure compliance of a service provided by the application.

In some embodiments, the configuration file is used by the voice assistant to determine a target interface for interacting with an application corresponding to a first intent, so that the voice assistant invokes the target interface to perform an operation related to the first intent.

In this embodiment of this application, the voice assistant may determine, based on the configuration file, the target interface for interacting with the application corresponding to the first intent, so that the voice assistant may invoke the target interface to perform the operation related to the first intent.

In some embodiments, the voice assistant development platform may further perform offline processing on a released first file.

In some embodiments, the voice assistant development platform is further configured to edit the configuration file in response to a first operation of the user.

In this embodiment of this application, the user may modify the configuration file on the voice assistant development platform, so that the configuration file can be updated, and the configuration file does not need to be re-uploaded, thereby improving efficiency.

In some embodiments, the voice assistant development platform is specifically configured to: add a mapping relationship between a second intent and the target interface to the configuration file; or modify the mapping relationship between the first intent and the target interface in the configuration file.

In this embodiment of this application, the user may modify the configuration file on the development platform, for example, add a mapping relationship between a new intent and the target interface, or change a mapping relationship between an original intent and the target interface, to improve development flexibility.

In some embodiments, the user may further customize the application, a corresponding intent, a used interface, interaction content, or the like on the development platform. This further improves the development flexibility.

In some embodiments, the voice assistant development platform is further configured to delete the first file in response to a second operation of the user.

In this embodiment of this application, for example, when the first file does not meet a platform requirement, the voice assistant development platform may further delete the first file based on an operation of the user or a manager, to complete review of the service provided by the application.

In some embodiments, the user may further edit the configuration file on the voice assistant development platform. This helps improve efficiency of modifying the configuration file.

An embodiment of this application further provides an electronic device, including a module configured to implement the voice interaction method according to any one of the foregoing possible implementations.

An embodiment of this application further provides an electronic device, including one or more processors and one or more memories. The one or more memories store one or more computer programs; the one or more computer programs include instructions; and when the instructions are executed by the one or more processors, the voice interaction method according to any one of the foregoing possible implementations is performed.

An embodiment of this application further provides a chip. The chip includes a processor and a communication interface. The communication interface is configured to receive a signal and transmit the signal to the processor. The processor processes the signal, so that the voice interaction method according to any one of the foregoing possible implementations is performed.

This embodiment further provides a computer-readable storage medium. The computer-readable storage medium stores computer instructions. When the computer instructions are run on a computer, the voice interaction method in the foregoing embodiments is performed.

An embodiment further provides a computer program product. When the computer program product runs on a computer, the computer is enabled to perform the foregoing related steps, to implement the voice interaction method in the foregoing embodiments.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments. Details are not described herein again.

In the several embodiments provided in this application, it should be understood that the disclosed system, apparatuses, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented by using some interfaces. Indirect couplings or communication connections between the apparatuses or units may be implemented in electrical, mechanical, or other forms.

The units described as separate parts may or may not be physically separate, and parts displayed as units may or may not be physical units, may be located in one location, or may be distributed on a plurality of network units. A part of or all the units may be selected based on an actual requirement to implement objectives of the solutions in this embodiment.

In addition, functional units in embodiments of this application may be integrated into one processing unit. Each of the units may alternatively exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially or the part contributing to the conventional technology or a part of the technical solutions may be embodied in a form of software product. The computer software product is stored in a storage medium, and includes several instructions for enabling a computer device (which may be a personal computer, a server, a network device, or the like) to perform all or a part of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A voice interaction method, wherein the method is applied to a voice interaction system, and the method comprises:
obtaining a first statement input by a user;
obtaining a first intent of the user based on the first statement;
determining a target interface for interacting with an application corresponding to the first intent, wherein the target interface is one or more of a synchronous interface, an asynchronous interface, or a UI interface; and
invoking the target interface to perform an operation related to the first intent.

2. The method according to claim 1, wherein the voice interaction system further comprises a configuration file, the configuration file comprises a mapping relationship between the first intent and the target interface, and the determining a target interface for interacting with an application corresponding to the first intent comprises:
determining, based on the configuration file, the target interface for interacting with the application corresponding to the first intent.

3. The method according to claim 1, wherein the target interface is a synchronous interface or an asynchronous interface, and the invoking the target interface to perform an operation related to the first intent comprises:
invoking the synchronous interface or the asynchronous interface, to transfer the first intent and slot information corresponding to the first intent to the application;
determining, based on a configuration file and a first result returned by the application, a first manner for outputting; and
outputting an execution result of the first intent based on the first manner.

4. The method according to claim 3, wherein when the target interface is a synchronous interface, before the determining, based on a configuration file and a first result returned by the application, a first manner for outputting, the method further comprises:
refusing to invoke the target interface to perform an operation related to a second intent, wherein the second intent is determined based on a second statement input by the user.

5. The method according to claim 3, wherein when the target interface is an asynchronous interface, before the determining, based on a configuration file and a first result returned by the application, a first manner for outputting, the method further comprises:
invoking the target interface to perform an operation related to a second intent, wherein the second intent is determined based on a second statement input by the user.

6. The method according to any one of claims 3 to 5, wherein the first result comprises first information, the first information indicates an execution result of the application, and the outputting an execution result of the first intent based on the first manner comprises:
determining the execution result based on the configuration file and the first information; and
outputting the execution result in the first manner.

7. The method according to any one of claims 3 to 5, wherein the first result comprises placeholder information, and the outputting an execution result of the first intent based on the first manner comprises:
determining the execution result based on the configuration file and the placeholder information; and
outputting the execution result in the first manner.

8. The method according to any one of claims 3 to 5, wherein the first result comprises content of the first manner, and the outputting an execution result of the first intent based on the first manner comprises:
outputting the execution result in the first manner.

9. The method according to any one of claims 3 to 8, wherein the first manner comprises at least one of the following:
text display, voice broadcast, and card display.

10. The method according to claim 1, wherein the target interface is a UI interface, and the invoking the target interface to perform an operation related to the first intent comprises:
invoking the UI interface to transfer the first intent and slot information corresponding to the first intent to the application; and
displaying a target display interface of the application, wherein the target display interface is a display interface that corresponds to the first intent and the slot information corresponding to the first intent.

11. The method according to any one of claims 1 to 10, wherein the obtaining a first intent of the user based on the first statement comprises:
sending the first statement to a cloud server; and
receiving the first intent obtained by the cloud server by parsing the first statement.

12. The method according to any one of claims 2 to 11, wherein the configuration file is predefined.

13. A voice assistant development platform, wherein:
the voice assistant development platform is configured to receive a first file, wherein the first file comprises an application and a configuration file, the configuration file comprises a mapping relationship between a first intent and a target interface, the target interface is an interface for interaction between a voice assistant and the application, and the target interface is one or more of a synchronous interface, an asynchronous interface, or a UI interface; and
the voice assistant development platform is further configured to: when it is determined that the first file meets a preset condition, send the first file or the configuration file to a voice assistant cloud server for a voice interaction service.

14. The voice assistant development platform according to claim 13, wherein the configuration file is used by the voice assistant to determine a target interface for interacting with an application corresponding to the first intent, so that the voice assistant invokes the target interface to perform an operation related to the first intent.

15. The voice assistant development platform according to claim 13 or 14, wherein the voice assistant development platform is further configured to:
edit the configuration file in response to a first operation of a user.

16. The voice assistant development platform according to claim 15, wherein the voice assistant development platform is specifically configured to:
add a mapping relationship between a second intent and the target interface to the configuration file; or modify a mapping relationship between the first intent and the target interface in the configuration file.

17. The voice assistant development platform according to any one of claims 13 to 16, wherein the voice assistant development platform is further configured to:
delete the first file in response to a second operation of the user.

18. An electronic device, comprising one or more processors and one or more memories, wherein the one or more memories store one or more computer programs; the one or more computer programs comprise instructions; and when the instructions are executed by the one or more processors, the voice interaction method according to any one of claims 1 to 12 is performed.

19. An electronic device, comprising a module configured to implement the voice interaction method according to any one of claims 1 to 12.

20. A chip, wherein the chip comprises a processor and a communication interface, the communication interface is configured to: receive a signal, and transmit the signal to the processor, and the processor processes the signal, so that the voice interaction method according to any one of claims 1 to 12 is performed.

21. A computer-readable storage medium, wherein the computer-readable storage medium stores computer instructions; and when the computer instructions are run on a computer, the voice interaction method according to any one of claims 1 to 12 is performed.

22. A computer program product comprising instructions, wherein when the computer program product runs on a computer, the voice interaction method according to any one of claims 1 to 12 is performed.
